# EUROPÄISCHE PATENTANMELDUNG

(11) **EP 4 273 182 A1**
(43) Veröffentlichungstag der Anmeldung: **08.11.2023**
(21) Anmeldenummer: 23166841.9
(22) Anmeldetag: 05.04.2023
(51) Int. Cl.: C08G 18/79, B32B 27/40, C08G 18/08, C08J 9/30, C08L 75/04, C08L 75/08, D06N 3/14

(54) **POLYURETHANFORMULIERUNG MIT VERMINDERTER ALDEHYDEMISSION UND DARAUS HERGESTELLTE VERBUNDGEBILDE**

(30) Priorität: 02.05.2022 DE 102022204321
(71) Anmelder: Benecke-Kaliko AG, 30419 Hannover (DE)
(72) Erfinder: Gerken, Andreas, 30165 Hannover (DE)
(74) Vertreter: Continental Corporation

(57) **Zusammenfassung**

Die vorliegende Erfindung betrifft fließfähige Formulierungen zur Ausbildung von Polyurethanbeschichtungen, die ein organisches Dihydrazid mit einer begrenzten Wasserlöslichkeit von höchstens 15 g pro 100 g Wasser aufweisen, wobei das Dihydrazid verwendet wird um Aldehydemissionen, die aus der Polyurethanbeschichtung oder Verbundgebilden, die eine entsprechende Polyurethanbeschichtung aufweisen, abgegeben werden, zu reduzieren oder zu eliminieren. Die vorliegende Erfindung betrifft weiterhin Verbundgebilde, die aus der fließfähigen Formulierungen gebildete Polyurethanbeschichtungen aufweisen, Verfahren zur Herstellung solcher Verbundgebilde und die Verwendung entsprechender organischer Dihydrazide zur Reduzierung und Eliminierung von Formaldehyd- und Acetaldehydemissionen in aus fließfähigen Beschichtungssystemen hergestellten flächigen Produkten.

## Beschreibung

Die vorliegende Erfindung betrifft fließfähige Formulierungen zur Ausbildung von Polyurethanbeschichtungen, die ein organisches Dihydrazid mit einer begrenzten Wasserlöslichkeit von höchstens 15 g pro 100 g Wasser aufweisen, wobei das Dihydrazid verwendet wird um Aldehydemissionen zu reduzieren, die aus der Polyurethanbeschichtung oder Verbundgebilden, die eine entsprechende Polyurethanbeschichtung aufweisen, abgegeben werden. Die vorliegende Erfindung betrifft weiterhin Verbundgebilde, die aus der fließfähigen Formulierung gebildete Polyurethanbeschichtungen aufweisen, Verfahren zur Herstellung solcher Verbundgebilde und die Verwendung entsprechender organischer Dihydrazide zur Reduzierung und Eliminierung von Formaldehyd- und Acetaldehydemissionen in aus fließfähigen Beschichtungssystemen hergestellten flächigen Produkten.

### Stand der Technik

Als Lederersatz bzw. als Material zum Verpolstern von Möbeln und Automobilbauteilen, oder auch für die Herstellung von Taschen, Schuhen etc. werden häufig Flächenmaterialien verwendet, die mindestens eine Polyurethanschicht aufweisen. Diese Flächenmaterialien haben in der Regel eine dekorative Oberflächenstruktur oder Narbung, die als geometrische Struktur oder mit einer lederähnlichen Optik ausgebildet ist. In diesem Fall sind die Flächenmaterialien als Kunstleder ausgebildet, d.h. sie sehen zwar aus wie Leder aus, basieren aber nicht auf tierischer Haut.

Derartige Polyurethan-Kunstleder werden häufig wegen ihrer angenehmen Haptik verwendet und lassen sich auf der Sichtseite meist nur schwierig von Leder unterscheiden. Da die Qualität von Leder von Haut zu Haut schwankend ist, die Verfügbarkeit von Leder mit ausreichender Qualität für Dekorzwecke begrenzt, der Preis von Leder vergleichsweise hoch ist und von den Verbrauchern zunehmend "tierfreie" (vegane) Produkte gefordert werden, werden in den letzten Jahren mehr und mehr Kunstleder als Ersatz für Leder nachgefragt und verwendet.

Kunstleder werden in vielen Bereichen eingesetzt, insbesondere in Innenräumen oder Bereichen, bei denen die Materialien in direktem Kontakt mit Personen stehen. Entsprechend ist darauf zu achten, dass solche Materialien frei von gesundheitsschädlichen und toxischen Stoffen sind, wenn sie in den Markt gelangen. Um dies sicherzustellen gibt es inzwischen vielfältige gesetzliche Regulierungen (wie insbesondere Reach-Regularien) und Produktspezifikationsanforderungen von Verarbeitern solcher Materialien. Darüber hinaus gibt es auch insbesondere in der Automobilindustrie sehr viele Anforderungen, die den Einsatz kritischer Stoffe beschränken wie die GADSL-Liste oder die Verbotslisten einzelner OEMs (Original Equipment Manufacturer).

Insbesondere die Automobilindustrie ist streng darauf bedacht, dass die in einem Innenraum eingesetzten Materialien frei bzw. arm an flüchtigen und insbesondere flüchtigen kritischen Stoffen sind. Um dies sicherzustellen, wurde eine Vielzahl von Laboremissionsprüfmethoden entwickelt, mit denen solche flüchtigen Stoffe in Innenraummaterialien bestimmt werden, wobei definierte Grenzwerte insbesondere für kritische Stoffe nicht überschritten werden dürfen. Solche Methoden sind beispielsweise die VDA 277 und die VDA 278.

Zunehmend werden zur Bestimmung auch Kammerprüfungen wie beispielsweise die BMW-Prüfvorschrift GS 97014-3 eingesetzt, um auch größere Prüfkörper untersuchen zu können als es in der VDA 277 oder VDA 278 möglich ist. Diese Kammerprüfungen können flüchtige Substanzen in der Regel auch wesentlich besser detektieren. Allen Prüfungen ist gemeinsam, dass die zu untersuchenden Materialien aufgeheizt werden um die dabei freiwerdenden Emissionen quantitativ und qualitativ untersuchen zu können. Mit zunehmender Empfindlichkeit der Emissionsprüfmethoden und immer strengeren gesetzlichen Regelungen werden die erlaubten Grenzwerte für die Gesamtemissionen zunehmend niedriger.

So wurden in der Vergangenheit häufig koagulierte Polyurethan-Kunstledern unter Verwendung des toxischen N,N-Dimethylformamid verwendet. Andere Lösungsmittel werden in den Rohstoffen oder im Herstellprozess auch heute noch häufig benutzt, die aber insbesondere für automobile Anwendungen nur noch in Spuren im Endprodukt nachweisbar sein dürfen; zudem ist die Verwendung von Lösungsmitteln auch für die am Herstellungsprozess beteiligten Arbeiter und für die Umwelt kritisch. Die weitere Reduktion dieser Stoffe stellt wegen der empfindlicheren Messmethoden ein immer relevanter werdendes Problem dar.

Zur Lösung der geschilderten Problematik wurden sogenannte High-Solid-Polyurethansysteme entwickelt, die ohne oder mit reduzierten Lösungsmittelmengen verarbeitet werden können, aber in der Regel zur Steuerung der Herstellreaktion ein Blockierungsmittel zur Verminderung der Reaktivität der eingesetzten Isocyanate enthalten. Diese Blockierungsmittel (z.B. 2-Butanonoxim) verbleiben mindestens anteilsmäßig im Endprodukt, was zu einem unangenehmen Geruch und erhöhten VOC (volatile organic compound)-Werten führt. Zudem sind diese Blockierungsmittel in vielen Ländern als toxikologisch bedenklich eingestuft.

Daneben können aber auch lösungsmittelfreie High-Solid-Systeme eingesetzt werden, die keine Blockierungsmittel enthalten, wie sie beispielsweise in der WO 2020/111945 A1 von der Firma Stahl oder in der EP 1 059 379 B1 beschrieben sind.

Alternativ können wasserbasierte Rohstoffe verwendet werden, um den Einsatz von organischen Lösungsmittel in der Verarbeitung zu vermeiden. So können beispielsweise zur Herstellung solcher Kunstleder Dispersionen auf Basis von Acrylaten oder Polyurethanen eingesetzt werden, wie dies in der WO 2019/174754 A1 oder DE 10 2012 106 557 A1 beschrieben wird.

Um den Einsatz von Lösungsmitteln zu vermeiden können anstelle von Polyurethanen-Kunstledern Kunstleder verwendet werden, die auf Weich-PVC beruhen. Solche Kunstleder haben allerdings den Nachteil, dass sie Weichmacher enthalten, die seit Jahren in der öffentlichen Diskussion stehen und deren Verwendung zunehmend kritischer gesehen wird. Dies hat zu einer zunehmenden Beschränkung der Verwendung der Weichmacher geführt (z.B. über Reach-Regulierungen, GADSL-Liste der Automobilhersteller etc.). Zudem sind Weichmacher in der PVC-Matrix nicht fest eingebunden, so dass sie über die Zeit aus der Polymermatrix herausmigrieren, was eine Änderung der Flexibilitätseigenschaften des PVC-Kunstleders zur Folge hat. Ein weiteres Problem besteht bei der längeren Einwirkung höherer Temperaturen, die bei Instrumententafelanwendungen im Automobil auftreten können; solche Einwirkungen können zu Verfärbungen und einem Nachlassen der mechanischen Stabilität führen, da aus dem PVC Salzsäure abgespalten wird und die PVC-Polymerketten zerstört werden.

Allen vorgeschlagenen Lösungen zur Herstellung ist gemeinsam, dass zwar Möglichkeiten zur Reduzierung der flüchtigen Verbindungen aufgezeigt werden, aber keine Lösung zur Vermeidung von Aldehyden wie Formaldehyd oder Acetaldehyd vorhanden ist. Solche Aldehyde werden häufig als Verunreinigung in lösungsmittelfreien Rohstoffen und Additiven und insbesondere auch in Trägertextilien für Kunstleder gefunden.

Kritisch ist dies insbesondere im Hinblick auf die gemäß GBIT 27630 in China maximal zulässigen Konzentrationen von Acetaldehyd und Formaldehyd, die nach einer Kammerprüfung für Automobilinnenraummaterialien detektiert werden dürfen.

In der US 2017/0349716 A1 wird vorgeschlagenen, solche Aldehyde mit Hilfe von "scavengern" zu binden. Dazu werden aromatische Amine und Amide (z.B. Anthranilamid wie es in PET-Flaschen eingesetzt wird) oder auch Cyclodextrine vorgeschlagen. Allerdings wird hier nur eine Lösung für reaktive Polyurethanschäume beschrieben, die sich nicht auf andere Polyurethansysteme übertragen lässt.

In der EP 2 379 465 B1 wird eine Leinwand auf Glasfaserbasis zur Gebäudeinnenverkleidung beschrieben, versehen mit einer Appretur, die methylenaktive Verbindungen, Hydrazide, Tannine, Amide, Aminosäuren, Peptide oder Proteinen enthält. Diese Verbindungen sollen Formaldehyd binden können. Allerdings wird hier keine Lösung beschrieben mit der zugleich auch flüchtiges Acetaldehyd unterdrückt werden kann.

In der JP 4407190 B2 wird ein System beschrieben, in dem zugleich Formaldehyd und Acetaldehyd eingefangen werden kann. Nachteilig an diesem System ist allerdings, dass hier ist der Zusatz von Polyethylenglykol, Tensiden und die Einstellung eines pH-Wertbereichs notwendig ist.

In der KR 100890351 B1 wird ebenfalls ein System auf Basis von Hydraziden beschrieben, mit dem Formaldehyd und Acetaldehyd eingefangen werden kann; dieses System muss auf (Holz)Faserplatten aufgebracht werden.

Die bisher für die Unterdrückung von Formaldehyd und Acetaldehyd vorliegenden Lösungen lassen sich nicht direkt auf eine Anwendung in Polyurethanschichtmaterialien übertragen. Demzufolge besteht ein Bedarf für eine Modifizierung von Polyurethanschichten und Polyurethanverbundgebilden in der Weise, dass die Zusammensetzungen zur Herstellung der Schichten möglichst wenig verändert werden müssen. Durch die Modifikation sollen die Schichten in die Lage versetzt werden, Formaldehyd und Acetaldehyd effektiv zu binden, um so Emissionen dieser Stoffe zu reduzieren oder zu eliminieren. Möglichst soll eine solche Reduzierung in einer oder mehreren Schichten eines entsprechenden Verbundgebildes möglich sein. Zudem sollen Materialien, die als Absorptionsmittel für die Aldehyde eingesetzt werden, die Verarbeitungseigenschaften der Polyurethansysteme nur unwesentlich beeinträchtigen, so dass diese weiterhin in üblichen Streich-, Sprüh, Gieß- und Einspritzverfahren verarbeitet werden können.

Die vorliegende Erfindung befasst sich mit diesem Bedarf.

### Detaillierte Beschreibung der Erfindung

In den dieser Erfindung zugrundeliegenden Untersuchungen wurde überraschend gefunden, dass durch den Zusatz von Dihydraziden mit geringer Wasserlöslichkeit wie insbesondere Adipinsäuredihydrazid oder Diphenyloxi-4,4'-disulfohydrazid gleichzeitig Emissionen von Acetaldehyd und Formaldehyd in einem Polyurethanverbundgebilde gesenkt werden können. Ein solches Verhalten wurde bei anderen Dihydraziden mit höherer Wasserlöslichkeit (z.B. Oxalsäuredihydrazid und Bernsteinsäuredihydrazid) nicht beobachtet, die nur entweder Formaldehyd oder Acetaldehyd gut absorbieren konnten.

Gemäß einem ersten Aspekt betrifft die vorliegende Erfindung demzufolge eine fließfähige Formulierung zur Ausbildung einer Polyurethanbeschichtung mit einem Gehalt an Polyurethan oder Polyurethanvorläufern, die ein organisches Dihydrazid mit einer Löslichkeit von höchstens 15 g in 100 g Wasser enthält. Bevorzugt weist das Dihydrazid eine Wasserlöslichkeit von höchstens 12 g in 100 g Wasser und weiter bevorzugt höchstens 10 g in 100 g Wasser auf.

Für das organische Dihydrazid ist es weiterhin bevorzugt, wenn es ein Molekulargewicht von gleich oder weniger als 500 g/mol, und weiter bevorzugt gleich oder weniger als 400 g/mol aufweist. Nach unten ist das Molekulargewicht mittelbar dadurch beschränkt, dass bei geringeren Molekulargewichten den Hydrazidfunktionalitäten ein höheres Gewicht zukommt, so dass organische Dihydrazide mit geringem Molekulargewicht in der Regel eine höhere Wasserlöslichkeit aufweisen. In der Regel hat das organische Dihydrazid daher ein Molekulargewicht von mindestens 150 g/mol.

Das organische Dihydrazid weist, wie es sich aus der Bezeichnung ergibt, zwei Hydrazidfunktionalitäten mit der Formel -X-NH-NH₂, wobei X = CO oder SO₂ ist. Über die NH und NH₂ Funktionalitäten können Aldehyde unter Wasserabspaltung und Bildung von -N=CHR₁ (mit R₁ = H bei Formaldehyd oder CH₃ bei Acetaldehyd) gebunden werden.

Im Kontext der hier beschriebenen Erfindung bevorzugte organische Dihydrazide beinhalten beispielsweise Sebacinsäuredihydrazid und andere längerkettige aliphatische Dihydrazide wie Adipinsäuredihydrazid und aromatische Dihydrazide, wie beispielsweise Isophthalsäure-dihydrazid, Terephthalsäuredihydrazid, 1,5-Naphthalindicarbohydrazid, 1,8-Naphthalindicarbohydrazid, 2,6-Naphthalindicarbohydrazid, 1,5-Diphenylcarbohydrazid, Diphenyloxi-4,4'-disulfohydrazid oder 2,4-Toluenedisulfonylhydrazide. Ganz besonders bevorzugte Dihydrazide sind im Kontext der hier beschrieben Erfindung Adipinsäuredihydrazid und Diphenyloxi-4,4'-disulfohydrazid. Die angegebenen organischen Dihydrazide können allein oder als Mischung der genannten organischen Dihydrazide verwendet werden; in einer bevorzugten Ausführungsform wird Adipinsäuredihydrazid und Diphenyloxi-4,4'-disulfohydrazid als Mischung verwendet.

Der Anteil der organischen Dihydrazide unterliegt keinen relevanten Einschränkungen, soweit durch den Zusatz des organischen Dihydrazids die Verarbeitungseigenschaften nicht wesentlich verändert werden und die Menge des zugesetzten organischen Dihydrazid ausreichend ist, um Formaldehyd und Acetaldehyd im gewünschten Ausmaß absorbieren zu können. In den meisten Fällen kann als geeigneter Anteil für das Dihydrazid (oder dessen Gesamtmenge bei einer Mischung) ein Gehalt von 0,01 bis 2 Gew.-%, bevorzugt 0,02 bis 1 Gew.-% und weiter bevorzugt 0,05 bis 0,5 Gew.-%, angegeben werden, wobei diese Mengenangaben fließfähige Formulierungen betreffen, die einen relevanten Anteil an Lösungsmittel enthalten. Die Angabe "Lösungsmittel" schließt hier Substanzen ein, in denen das Polyurethan nicht gelöst wird, z.B. Wasser, die aber nach der Verarbeitung der fließfähigen Formulierung nicht mit in einer daraus gebildeten Polyurethanschicht enthalten sind.

Alternativ kann der Gehalt des Dihydrazids bezogen auf die Trockenmasse der Formulierung angegeben werden. In diesem Fall beträgt der Anteil des Dihydrazids zweckmäßig höchstens 5 Gew.-%, bevorzugt liegt der Anteil im Bereich von 0,02 bis 4 Gew.-%, weiter bevorzugt 0,04 bis 2,0 Gew.-% und noch weiter bevorzugt 0,1 bis 1,0 Gew.-%.

Der in der fließfähigen Formulierung enthaltene Hauptbestandteil ist ein Polyurethan oder ein Polyurethanvorläufer. Polyurethane bezeichnen dabei Polymere, die in der Regel aus Polyisocyanaten und Polyolen gebildet werden, und zwischen den das Polymer bildenden Einheiten Urethangruppen (-NH-CO-O-) aufweisen. Zusätzlich können Polyurethane in der hier beschriebenen Erfindung auch Harnstoffgruppen (-NH-CO-NH-) enthalten, die sich aus der Hydrolyse von Isocyanatgruppen und die anschließende Reaktion der gebildeten Amine mit Isocyanaten ergeben können. Darüber hinaus kann das Urethan weitere funktionelle Gruppen, wie insbesondere Ether-, Ester- oder Carbonatgruppen enthalten, die in Form von Polyetherpolyolen oder Polyesterpolyolen in einem Polyolvorläufer der Polyurethane enthalten sind, sowie Thiourethangruppen, die aus einer Umsetzung von Thiolen mit Isocyanaten resultieren können. Polyurethanvorläufer bezeichnen Vorläufer eines Polyurethans, aus denen das Polyurethan gebildet wird. Polyurethanvorläufer sind in erster Linie Polyisocyanate und Polyole, aber auch Isocyanatpräpolymere, die durch Umsetzung von Polyolen mit einem Überschuss an Polyisocyanat erhalten werden. Oft werden solche Isocyanatpräpolymere mit einem Überschuss von Isocyanatgruppen (NCO) zu OH Gruppen von 2:1 oder mehr gebildet, so dass diese Isocyanatpräpolymere im Mittel aus einer Polyoleinheit und zwei Polyisocyanateinheiten gebildet sind; bei höheren NCO/OH-Verhältnissen liegt zusätzlich freies Polyisocyanat vor.

In einer bevorzugten Ausführungsform enthält die fließfähige Formulierung ein Polyol und ein Isocyanatpräpolymer, sowie gegebenenfalls zusätzlich ein Polyisocyanat. In einem solchen Fall ist die fließfähige Formulierung in den meisten Fällen auch ohne den Zusatz eines Lösungsmittels ausreichend fluid für eine Verarbeitung, so dass die fließfähige Formulierung bevorzugt keinen Zusatz eines Lösungsmittels enthält.

In einer weiteren Ausführungsform enthält die fließfähige Formulierung ein Polyurethan, und ist bevorzugt als Lösung oder Dispersion (z.B. in Wasser) ausgebildet. In diesem Fall kann es zweckmäßig sein, wenn das Polyurethan zur Verbesserung der Dispersionsfähigkeit zusätzliche polare funktionelle Gruppen enthält (beispielsweise Carbonsäuregruppen, die über Carbonsäure-haltige Polyole in das Polyurethan eingebunden sein können).

Aus verarbeitungstechnischer Sicht ist es weiterhin bevorzugt, wenn das Polyurethan oder die Polyurethanvorläufer in der fließfähigen Formulierung wenige Verzweigungen aufweisen. Bevorzugt ist das Polyurethan oder die Polyurethanvorläufer linear, d.h. die Polyole und Polyisocyanate, aus denen das Polyurethan oder die Polyurethanvorläufer gebildet sind, sind jeweils (in Bezug auf OH und NCO) difunktionell. Dabei kann wie erwähnt ein geringer Anteil an tri- oder polyfunktionellen Polyolen und Polyisocyanaten (z.B. bis zu jeweils 5 Gew.-% und bevorzugt bis zu jeweils 2 Gew.-%) toleriert werden, ohne dass sich dies in relevant schädlichem Ausmaß auf die Verarbeitbarkeit auswirkt, insbesondere, wenn der Anteil der tri- oder polyfunktionellen Polyolen und Polyisocyanaten durch höhere Molekulargewichte der Polyole kompensiert wird.

Bevorzugte Polyisocyanate, die als Polyurethanvorläufer verwendet werden können oder aus denen das Polyurethan in der erfindungsgemäßen fließfähigen Formulierung gebildet ist, umfassen aliphatische Polyisocyanate wie Isophorondiisocyanat, Hexamethylendiisocyanat, Dicyclohexylmethan-4,4'-diisocyanat, Hexandiisocyanat und Bis(isocyanatomethyl)-cyclohexan.

Geeignete Polyole, die als Polyurethanvorläufer verwendet werden können, oder aus denen das Polyurethan in der erfindungsgemäßen fließfähigen Formulierung gebildet sein kann, sind bifunktionelle Polyole und insbesondere bifunktionelle aliphatische Polyole wie Polyetherglykol (z.B. Polyethylenglycol, Polypropylenglycol oder Polytetrahydrofurandiol), Polyesterglykol (z.B. auf Basis von Adipinsäure und α,ω-aliphatischen Diolen mit 1 bis 8 und bevorzugt 4 bis 6 CH₂-Einheiten), Polythioetherpolyol, Polycarbonatpolyol (z.B. auf Basis von 1,6-Hexandiol), ein hydroxylgruppenhaltiges aliphatisches Polyacetat und/oder ein hydroxygruppenhaltiges aliphatisches Polycarbonat. In einer bevorzugten Ausführungsform enthält das Polyurethan oder einer der Polyurethanvorläufer ein Polyetherdiol und/oder ein Polyesterdiol. Ganz besonders bevorzugt enthält das Polyurethan oder die Polyurethanvorläufer Polyethereinheiten, die bevorzugt aus Polyetherpolyolen oder mit Polyethern verlängerten Polyestern resultieren können.

Neben dem Polyurethan (oder dessen Vorläufern) und dem Dihydrazid kann die erfindungsgemäße fließfähige Formulierung weitere Additive zur Eigenschaftsteuerung enthalten. Beispielsweise kann es wünschenswert sein, wenn das Polyurethan infolge der Bildung einer Polyurethanschicht partiell vernetzt wird. zu diesem Zweck kann die fließfähige Formulierung zusätzlich geeignete Vernetzer, z.B. auf Basis von Isocyanaten, Carbodiimiden und/oder Epoxiden enthalten. Als geeigneter Anteil für solche Vernetzer kann eine Menge im Bereich von bis zu 5 Gew.-% bezogen auf die Trockenmasse der fließfähigen Formulierung angegeben werden, wobei typischerweise der Anteil in einem Bereich von 0,2 bis 4 Gew.-% und bevorzugt etwa 1 bis 3 Gew.-% eingestellt wird.

Neben Vernetzungsmitteln können übliche Additive in die fließfähige Formulierung einbezogen werden und darin enthalten sein, die (ohne Beschränkung) ausgewählt sind aus Füllstoffen, insbesondere mineralischen und/oder biobasierten Füllstoffen, Flammschutzmitteln und/oder Flammschutzsystemen, Verdickern, Rheologiehilfsmitteln, Tensiden, pH-regulierenden Mitteln, Entlüftungsmitteln, Alterungsschutzmitteln, Pigmenten und Schaumstabilisierungsmitteln.

Ein geeinigter Verdicker ist beispielsweise ein Verdicker auf Basis von Acrylat-Copolymeren. Ein geeigneter Entschäumer ist z.B. ein auf Silikon basierter Entschäumer. Geeignete Schaumstabilisatoren sind beispielsweise Ammoniumstearat, Succinamat und Natriumsalz von Fettsäurealkylpolyglycolethersulfaten. Geeignete Flammschutzmittel sind insbesondere ausgewählt aus der Gruppe umfassend organische Phosphorverbindungen wie organisches Phosphinat, Arylphosphatester oder phosphorhaltiges Polyol, Ammoniumphosphat oder -polyphosphat, Melamincyanurat, Melamin, Melaminphosphat oder -polyphosphat, roter Phosphor, Aluminiumdiethylphosphinat, Aluminiumtrihydroxid, Magnesiumhydroxid, Zinkstannat, expandierbarer Graphit, und Zinkborat.

Bei Additiven wie Verdickern, Rheologiehilfsmitteln, Tensiden, pH-regulierenden Mitteln, Entlüftungsmitteln, Alterungsschutzmitteln, Pigmenten und Schaumstabilisierungsmitteln ist es meist ausreichend, wenn diese in vergleichsweise geringen Mengen in die erfindungsgemäße fließfähige Formulierung einbezogen werden, so dass deren Gesamtgehalt in der Regel 10 Gew.-% bezogen auf den Trockengehalt der fließfähigen Formulierung nicht übersteigt.

Demgegenüber können Füllstoffe und insbesondere Flammschutzmittel auch in größeren Mengen in die fließfähige Formulierung einbezogen werden. Enthält die fließfähige Formulierung ein Flammschutzmittel und/oder ein Flammschutzsystem (d.h. eine Kombination von mehreren Flammschutz aktiven Substanzen), können diese einen Anteil von 20 bis 55 Gew.-% und insbesondere 30 bis 50 Gew.-% in der Formulierung ausmachen. Der Füllstoffgehalt kann in einem ähnlichen Bereich eingestellt werden.

In einem weiteren Aspekt betrifft die vorliegende Erfindung ein flächiges Verbundgebilde mit mehreren Schichten, wobei mindestens eine der Schichten durch Verfestigung einer fließfähigen Formulierung, wie sie vorstehend beschrieben wurde, gebildet ist. Die Angabe "Verbundgebilde" bezeichnet den Umstand, dass das Gebilde mehrere miteinander verbundene Schichten mit unterschiedlicher Zusammensetzung aufweist. In dem Verbundgebilde ist mindestens eine der Schichten durch Verfestigung einer wie vorstehend beschriebenen fließfähigen Formulierung gebildet, d.h. das zur Bildung der Schicht Polyurethanvorläufer zu einer verfestigten Schicht reagiert haben können, oder dass Lösungsmittel, das in der fließfähigen Formulierung für die Verarbeitung enthalten war in Folge von Verdampfung zumindest großteilig aus der Formulierung entfernt wurde.

In einer bevorzugten Ausführungsform weist das flächige Verbundgebilde eine geprägte oder genarbte Deckschicht, eine Schicht aus verfestigtem Schaum und eine Textilschicht auf der der Deckschicht gegenüberliegenden Seite des Verbundgebildes auf. Die geprägte oder genarbte Deckschicht weist eine bestimmte und erwünschte dreidimensionale Oberflächenstruktur auf, die bei einer Prägung regelmäßig sein kann und bei einer Narbe so gestaltet ist, dass der Benutzer die Struktur mit einer Lederoberfläche assoziiert; diese kann ein Aussehen aufweisen wie die zur Haarseite (oder Außenseite, wenn keine Haare vorhanden) gerichtete, Oberfläche eines echten Leders.

In einer bevorzugten Ausführungsform ist die Schicht, die durch Verfestigung der vorstehend beschriebenen fließfähigen Formulierung hergestellt wurde, in direktem Kontakt oder über eine Zwischenschicht in Kontakt mit der Textilschicht. Durch diese Anordnung können Aldehydemissionen, die aus der Textilschicht freigesetzt werden, effektiv und nahe dem Ort ihrer Entstehung gebunden werden. In einer Ausführungsform bildet die fließfähige Formulierung in dem Verbundgebilde eine Schicht aus verfestigtem Schaum. In einer anderen Ausführungsform bildet die fließfähige Formulierung in dem Verbundgebilde eine Schicht, mit der eine Schicht aus verfestigtem Schaum mit einer Textilschicht verbunden wird. In einer noch weiteren Ausführungsform bildet die fließfähige Formulierung in dem Verbundgebilde eine Schicht aus verfestigtem Schaum und eine Schicht, mit der eine Schicht aus verfestigtem Schaum mit einer Textilschicht verbunden wird. In diesem Fall sind die Zusammensetzungen der fließfähigen Formulierung in den beiden Schichten in der Regel verschieden.

Die Dicke der Schicht, die aus der fließfähigen Formulierung erzeugt wird, unterliegt keinen wesentlichen Beschränkungen, solange die Schicht dick genug ist, um die benötige mechanische Festigkeit zu liefern. Bei zu großen Schichtdicken kann andererseits das Material sehr fest und schwer werden, was auch aus Kostenerwägungen meist unerwünscht ist. Die Schichtdicke der Schicht, die aus der fließfähigen Formulierung erzeugt wird, liegt daher bevorzugt im Bereich von 0,05 bis 2 mm, und weiter bevorzugt im Bereich von 0,1 bis 1 mm.

Als Textilträgerschicht können alle in Bereich der Kunstleder üblich verwendeten Textilien verwendet werden, insbesondere Textilien auf Basis von Polyestern.

Bei dem erfindungsgemäßen Verbundgebilde kann es sich ebenfalls um ein direkt beschichtetes Textil handeln, bei dem die Polyurethanschicht aus der fließfähigen Formulierung als obere ggf. noch mit einem Lack überschichteten Schicht vorliegt, um ein entsprechend beschichtetes Leder oder ein anderes beschichtetes Flächengebilde handeln.

Ganz besonders bevorzugt ist es, wenn das flächige Verbundgebilde als Kunstleder mit einer kompakten Deckschicht, einer darunter angeordneten Schaumschicht, einer Kleberschicht und einer Textilträgerschicht ausgebildet ist.

Das Verbundgebilde kann, insbesondere wenn es über eine Transferbeschichtung hergestellt wurde, auf der Oberfläche eine Lackierung aufweisen, z.B. mit einem Acrylat- oder Polyurethan-basierten Lack.

Ein weiterer Aspekt der vorliegenden Erfindung betrifft ein Verfahren zu Herstellung eines flächigen Verbundgebildes, wie es vorstehend beschrieben wurde, wobei eine fließfähige Formulierung gemäß dem vorbeschriebenen ersten Aspekt auf ein Substrat aufgebracht und zu einer zusammenhängenden Schicht verfestigt wird. Bei dem Substrat kann es sich um ein Substrat handeln, dass nicht selbst in das flächige Verbundgebilde eingebunden wird, d.h. z.B. eine Abziehfolie, mit der eine gewünschte Oberflächenstruktur in die zu bildende Schicht eingebracht wird, oder eine flache Abziehfolie. Alternativ kann das Substrat ein Bestandteil des erzeugten Verbundgebildes sein, auf dass die fließfähige Formulierung aufgebracht und dort zu einer Schicht verfestigt wird.

Das Aufbringen kann mit Hilfe jedes zu diesem Zweck geeigneten Verfahren durchgeführt werden, mit dem die fließfähige Formulierung auf einer größeren Fläche möglichst gleichmäßig verteilt werden kann. Bevorzugte Verfahren zum Aufbringen der fließfähigen Formulierung beinhalten z.B. Streichverfahren (z.B. in der Weise, dass die fließfähige Formulierung vor einem Rakel auf das Substrat aufgebracht wird, der in einem definierten Abstand über das Substrat geführt wird, und so die fließfähige Formulierung mit einer bestimmten Dicke auf den Substrat verteilt), Sprühverfahren, Gießverfahren oder auch Einspritzverfahren.

Ein noch weiterer Aspekt der vorliegenden Erfindung betrifft die Verwendung eines organischen Dihydrazids mit einer Löslichkeit von höchstens 15 g in 100 g Wasser zur Reduzierung oder Eliminierung von Formaldeyd- und Acetaldehydemissionen in aus fließfähigen Beschichtungssystemen hergestellten flächigen Produkten. Die "Reduzierung" erfolgt dabei bevorzugt in einer Weise, dass die Formaldeyd- und Acetaldehydemissionen um mindestens 30%, weiter bevorzugt um mindestens 50% und noch weiter bevorzugt um mindestens 70% gegenüber einer Referenz reduziert werden, die kein organisches Dihydrazid enthält.

Bei diesen fließfähigen Beschichtungssystemen kann es sich um fließfähige Formulierungen auf Basis von Polyurethanen oder Polyurethanvorläufern handeln, aber auch um andere fließfähige Beschichtungssysteme wie PVC-Plastisole, Polyolefindispersionen, Acylatdispersionen oder Polymer-Latexformulierungen (Latices). Denkbar ist darüber hinaus die Verwendung der beschrieben Dihydrazide als Bestandteil von thermoplastischen Folien oder Mehrschichtverbunden mit solchen Folien z.B. auf Basis von TPU, PVC, Polyolefinen, PET, Polyamiden.

Wie bei den vorbeschriebenen Kunstledern sind die Dihydrazide auch wirksam in der Absorption und Eliminierung von Aldehydemission, die von Materialien ausgehen, die nicht in der fließfähigen Formulierung enthalten sind. Die beschriebene Verwendung schließt daher auch solche Verwendungen ein, bei denen die fließfähige Formulierung z.B. als Beschichtung auf Formaldehyd-haltige oder -basierte Materialien wie beispielsweise Holz-Faserverbundplatten aufgebracht wird, z.B. in dem diese mit einer entsprechenden fließfähigen Formulierung imprägniert, bestrichen oder besprüht werden.

Wenn entsprechend beschichtete Textilien oder andere Wand- oder Deckenbespannmaterialien entsprechend behandelt sind, kann so die Aldehydbelastung der Innenraumluft reduziert werden.

Ebenso schließt die beschriebe Verwendung eine Verwendung der Dihydrazide in reaktiven Systemen wie reaktiven Polyurethan-, Polyharnstoff-, Epoxidvernetzenden Systemen ein, die für Beschichtungen und Imprägnierungen verwendet werden.

Durch den Einbezug der Dihydrazide in Polyurethanformulierungen, die zu Schichten verarbeitet werden, lassen sich insbesondere die folgenden Vorteile realisieren:
- Formaldeyd- und Acetaldehydemissionen können in einer Polyurethanschicht oder in einem Polyurethanverbundmaterial gleichzeitig reduziert oder eliminiert werden
- Bestehende Formulierungen lassen sich einfach modifizieren, um die Aldehydemissionen im Endprodukt zu verringern oder zu eliminieren
- emissionsfreie Verbundmaterialien ohne Lösungsmittel und ohne andere Kohlenwasserstoffe können unter Verwendung üblicher Transferbeschichtungs- oder Direktbeschichtungsverfahren dargestellt werden
- die so hergestellten Verbundgebilde können Formaldehyd- und Acetaldehydemissionen auch aus der Umgebungsluft eliminieren

Im Folgenden wird die vorliegende Erfindung anhand einiger illustrierender Beispiele noch näher erläutert, die jedoch nicht in irgendeiner Weise als beschränkend hinsichtlich der Anwendbarkeit oder des Schutzbereichs der Anmeldung zu verstehen sind.

### Beispiele:

Es wurden verschiedene Verbundgebilde mit einer kompakten Deckschicht, einer geschäumten Zwischenfolie, einer Polyurethankaschiermasse und einem textilen Träger hergestellt. Hierzu wurden ausschließlich lösungsmittelfreie Formulierungen verwendet. Für die Verbundgebilde wurde entweder die geschäumte Folie oder die Polyurethankaschiermasse mit einem Dihydrazid (Adipinsäuredihydrazid oder Diphenyloxi-4,4'-disulfohydrazid als erfindungsgemäße Dihyrazide und Bernsteinsäuredihydrazid, Oxalsäuredihydrazid oder Semicarbazid Hydrochlorid als Referenzsubstanzen) modifiziert. Die Herstellung der Verbundgebilde ist im Folgenden beschrieben:

### 1 a) Herstellung der kompakten Deckfolie:

1000 g einer aliphatischen Polyether-Polyurethandispersion mit 60% Festkörper werden mit 15 g eines Verdickers auf Basis eines Acrylat-Copolymeren, 5 g eines Silikon-basierten Entschäumers und 8 g eines Isocyanat-Vernetzers (aliphatisches Isocyanat auf Basis eines 1,6-Hexamethylendiisocyanats; 21,8% Isocyanatgehalt) in einem Ansatzbehälter 10 min gerührt und die Masse anschließend in einer Vakuumatmosphäre entlüftet.

### Die Masse wird mit einem Streichmesser und einem Spaltabstand von 120 µm auf ein geeignetes Streichpapier (mit einem Oberflächenprofil, dass dem Negativ einer Ledernarbe entspricht) aufgetragen und 120 Sekunden bei 80°C bis 150°C (mit ansteigendem Temperaturprofil) getrocknet. Auf diese Weise wird eine Folie mit einem Gewicht von ca. 55 - 65 g/m² erhalten.

### b) Herstellung und Applikation der geschäumten Folie:

Die Herstellung der geschäumten Folie wird exemplarisch anhand der folgenden Rezeptur dargestellt:
750 g einer aliphatischen Polyether-Polyurethandispersion mit 60% Festkörper werden unter Rühren mit ca. 2,8 g eines Verdickers auf Acrylatbasis, 9,4 g Stokal SR (Schaumhilfsmittel, Bozetto), 9,4 g Stokal SAF new (Schaumhilfsmittel, Bozetto), 28 g Stokal STA (Schaumhilfsmittel, Bozetto) und 20 g eines Isocyanat-Vernetzers (aliphatisches Isocyanat auf Basis eines 1,6-Hexamethylendiisocyanats; 23,5 % Isocyanatgehalt) und 300 g eines Flammschutzmittels auf Basis Aluminiumtrihydroxid und mit der in Tabelle 1 angegebenen Menge an Dihydrazid vermischt und in einem Ansatzbehälter 10 min gerührt.

Die Masse wird dann in einem Schlagschaummixer der Fa. Hansa auf eine Dichte von 500 g/l aufgeschäumt, gleichmäßig mit einem Streichmesser mit einem definierten Rakelspalt von 800 µm auf die in 1a) hergestellte Folie aufgetragen und 240 Sekunden bei 110°C bis 155°C mit ansteigendem Temperaturprofil getrocknet.

### c) Herstellung des Verbundmaterials durch Applikation der Kaschiermasse und des textilen Trägers:

835 g einer aliphatischen Polyurethandispersion mit 50 % Festkörper werden unter Rühren mit ca. 5,9 g eines Verdickers auf Acrylatbasis, 16,7 g eines Isocyanat-Vernetzers (aliphatisches Isocyanat auf Basis eines 1,6-Hexamethylendiisocyanats; 23,5 % Isocyanatgehalt) und mit der in Tabelle 1 angegebenen Menge an Dihydrazid vermischt und in einem Ansatzbehälter 10 min gerührt.

Die Masse wird gleichmäßig mit einem Streichmesser und einem Spaltabstand von 200 µm auf die in 1b) hergestellte Folie aufgetragen. Dann wird in die verstrichene noch flüssige Masse ein textiler Träger (Gestrick, Polyester-Fang-Krepp mit 120 g/m² Gewicht, Fa. Reichenbach) eingelegt und 240 Sekunden bei 80°C bis 155°C mit ansteigendem Temperaturprofil getrocknet.

Der so hergestellte Verbund wird anschließend vom Trägerpapier abgezogen und kann optional oberflächlich noch mit einer Lackierung versehen werden.

Für die so hergestellten Verbundsysteme wurden anschließend der Formaldehydgehalt (gemäß VDA 275) und der Acetaldehydgehalt (gemäß VDA 277) bestimmt. Zusätzlich wurden als Referenz die Formaldehyd- und Acetaldehydgehalte des in den Beispielen verwendeten Polyester-Fang-Krepps, eines hierzu ähnlichen Polyester-Interlock-Gestricks und einer Referenzkonstruktion bestimmt, die nicht mit einem Dihydrazid oder mit Semicarbazid HCl modifiziert war. Die gemessenen Formaldehyd- und Acetaldehydgehalte sind in der folgenden Tabelle 1 angegeben:

| | | Einsatzmenge Dihydrazid in Schicht 1 c [g] | Einsatzmenge Dihydrazid in Schicht 1 b [g] | Formaldehyd [mg/kg] VDA 275 | Acetaldehyd [µg C/g] VDA 277 |
|---|---|---|---|---|---|
| Vergleichsbeispiel 1 | Polyester-Fang-Krepp-Gestrick, 120 g/m² | - | - | 1,2 | 42 |
| Vergleichsbeispiel 2 | Polyester-Interlock-Gestrick, 90 g/m² | - | - | 0,8 | 51 |
| Vergleichsbeispiel 3 | Referenzkonstruktion | - | - | 0,7 | 1,8 |
| Beispiel 1 | Diphenyloxi-4,4'-disulfohydrazid | 10 | - | 0,5 | 1,8 |
| Beispiel 2 | wie Beispiel 1 | 20 | - | 0,4 | 0,8 |
| Beispiel 3 | wie Beispiel 1 | 40 | - | nicht nachweisbar | 0,4 |
| Beispiel 4 | wie Beispiel 1 | - | 12 | 0,5 | nicht nachweisbar |
| Beispiel 5 | Adipinsäuredihydrazid | 6 | - | 0,5 | 0,8 |
| Beispiel 6 | wie Beispiel 5 | 12 | - | 0,4 | 0,2 |
| Beispiel 7 | wie Beispiel 5 | 20 | - | 0,3 | nicht nachweisbar |
| Vergleichsbeispiel 4 | Bernsteinsäuredihydrazid | 10 | - | 2,7 | nicht nachweisbar |
| Vergleichsbeispiel 5 | wie Vergleichsbeispiel 4 | 20 | - | 4,0 | nicht nachweisbar |
| Vergleichsbeispiel 6 | Oxalsäuredihydrazid | 10 | - | 1,1 | 0,2 |
| Vergleichsbeispiel 7 | wie Vergleichsbeispiel 6 | 20 | - | 1,0 | 0,2 |
| Vergleichsbeispiel 8 | Semicarbazid Hydrochlorid | 20 | - | nicht nachweisbar | 6,0 |

Die Vergleichsbeispiele 1 und 2 zeigen, dass neben Rohstoffen vor Allem die in den Verbundmaterialien eingesetzten Textilien auf Basis von Polyethylenterephthalat ("Polyester") eine Quelle von Formaldehyd und Acetaldehyd darstellen.

In der Referenzkonstruktion (Vergleichsbeispiel 3), die keinen Zusatz von Dihydraziden enthielt, wurden Mengen von 0,7 mg/kg Formaldehyd (gemäß VDA 275) und 1,8 µg C/g Acetaldehyd (gemäß VDA 277) gemessen.

Bei der Verwendung von Bernsteinsäuredihydrazid in der Polyurethankaschiermasse (Vergleichsbeispiele 4 und 5) werden zwar die Acetaldehydemissionen komplett eliminiert aber die Formaldehydemissionen sind sogar höher als in der Referenzkonstruktion. Ähnliches wurde bei der Verwendung von Oxalsäuredihydraziden in der Polyurethankaschiermasse (Vergleichsbeispiele 6 + 7) beobachtet. Während die Acetaldehydemissionen deutlich reduziert werden, steigen auch hier die Formaldehydemissionen an.

Bei Einsatz eines Semicarbazids kann der Formaldehydgehalt soweit reduziert werden, dass er nicht mehr nachweisbar ist. Jedoch steigt der messbare Gehalt an Acetaldehyd deutlich an (sh. Vergleichsbeispiel 8).

Durch den Einsatz von Diphenyloxi-4,4'-disulfohydrazid in der Referenzkonstruktion (in der Schicht 1 c benachbart zum textilen Träger) lassen sich bei ansteigender Einsatzmenge sowohl die Formaldehyd- als auch die Acetaldehydemissionen reduzieren (Beispiele 1 bis 3). Dabei wird bei der Formaldehydmenge ein nicht mehr nachweisbares Niveau erreicht.

Bei Einsatz dieses Dihydrazids in der geschäumten Schicht 1 b) kann der Acetaldehydgehalt auf ein nicht mehr nachweisbares Niveau gesenkt werden, während der Formaldehydgehalt ebenfalls merklich reduziert wird (Beispiel 4).

Durch Kombination der Dihydrazidmengen aus den Beispielen 3 + 4 wäre so eine Konstruktion möglich, bei der mit VDA 275 und VDA 277 kein Formaldehyd oder Acetaldehyd mehr nachgewiesen werden kann.

Die Beispiele 5 - 7 zeigen, dass bei Einsatz von Adipinsäuredihydrazid in Schicht 1 c) die Acetaldehydemissionen auf ein nicht nachweisbares Niveau gesenkt werden können, während die Formaldehydemission parallel sinkt.

Vor dem Hintergrund dieser Beobachtungen erscheint es denkbar, dass eine Kombination beider Dihydrazide (Adipinsäuredihydrazid und Diphenyloxi-4,4'-disulfohydrazid) entweder einzeln oder als Gemisch in einer der beiden Lagen 1 b und 1 c oder auch in beiden Lagen eingesetzt wird.

## Patentansprüche

1. Fließfähige Formulierung zur Ausbildung einer Polyurethanbeschichtung mit einem Gehalt an Polyurethan oder Polyurethanvorläufern, **dadurch gekennzeichnet, dass** die Formulierung einen Gehalt an einem organischen Dihydrazid mit einer Löslichkeit von höchstens 15 g in 100 g Wasser aufweist.

2. Fließfähige Formulierung gemäß Anspruch 1, **dadurch gekennzeichnet, dass** das Dihydrazid in Form von Diphenyloxi-4,4'-disulfohydrazid, Adipinsäuredihydrazid oder einer Mischung davon in der fließfähigen Formulierung enthalten ist.

3. Fließfähige Formulierung gemäß Anspruch 1 oder 2, **dadurch gekennzeichnet, dass** die Formulierung einen Gehalt an organischem Dihydrazid im Bereich von 0,01 bis 2 Gew.-%, bevorzugt 0,02 bis 1 Gew.-% und weiter bevorzugt 0,05 bis 0,5 Gew.-%, bezogen auf das Gesamtgewicht der Formulierung aufweist.

4. Fließfähige Formulierung gemäß einem der Ansprüche 1 bis 3, **dadurch gekennzeichnet, dass** die Formulierung einen Gehalt an organischem Dihydrazid im Bereich von 0,02 bis 4 Gew.-%, bevorzugt 0,04 bis 2,0 Gew.-% und weiter bevorzugt 0,1 bis 1,0 Gew.-%, bezogen auf das die Trockenmasse der Formulierung aufweist

5. Fließfähige Formulierung gemäß einem der vorangehenden Ansprüche, **dadurch gekennzeichnet, dass** die Formulierung zusätzlich einen oder mehrere Vernetzer ausgewählt aus der Gruppe umfassend Isocyanat-, Carbodiimid- und Epoxy-Vernetzer enthält.

6. Fließfähige Formulierung gemäß einem der vorangehenden Ansprüche, **dadurch gekennzeichnet, dass** das Polyurethan oder die Polyurethanvorläufer ein aliphatisches Polyurethan ist oder aliphatische Polyurethanvorläufer sind, und bevorzugt Polyethereinheiten aufweist.

7. Fließfähige Formulierung gemäß einem der vorangehenden Ansprüche, **dadurch gekennzeichnet, dass** die Formulierung zusätzlich ein oder mehrere Additive ausgewählt aus Füllstoffen, insbesondere mineralischen und/oder biobasierten Füllstoffen, Flammschutzmitteln und/oder Flammschutzsystemen, Verdickern, Rheologiehilfsmitteln, Tensiden, pH-regulierenden Mitteln, Entlüftungsmitteln, Alterungsschutzmitteln, Pigmenten und Schaumstabilisierungsmitteln enthält.

8. Flächiges Verbundgebilde mit mehreren Schichten, **dadurch gekennzeichnet, dass** mindestens eine der Schichten durch Verfestigung einer fließfähigen Formulierung gemäß mindestens einem der Ansprüche 1 bis 7 gebildet ist.

9. Flächiges Verbundgebilde gemäß Anspruch 8, das eine genarbte Deckschicht, eine Schicht aus verfestigtem Schaum und eine Textilschicht auf der der Deckschicht gegenüberliegenden Seite des Verbundgebildes aufweist, wobei bevorzugt die Schicht aus verfestigtem Schaum aus der fließfähigen Formulierung gemäß mindestens einem der Ansprüche 1 bis 7 gebildet ist.

10. Flächiges Verbundgebilde gemäß Anspruch 8 oder 9, das als Kunstleder mit einer kompakten Deckschicht, einer darunter angeordneten Schaumschicht, gegebenenfalls einer Kleberschicht und einer Textilträgerschicht ausgebildet ist, wobei bevorzugt die Kleberschicht aus der verfestigten fließfähigen Formulierung gemäß mindestens einem der Ansprüche 1 bis 7 gebildet ist.

11. Verfahren zu Herstellung eines Verbundgebildes gemäß mindestens einem der Ansprüche 8 bis 10, wobei eine fließfähige Formulierung gemäß mindestens einem der Ansprüche 1 bis 7 auf ein Substrat aufgebracht und zu einer zusammenhängenden Schicht verfestigt wird.

12. Verfahren nach Anspruch 11, wobei das Aufbringen durch ein Streich-, Sprüh-, Gieß- oder Einspritzverfahren erfolgt.

13. Verwendung eines organischen Dihydrazids mit einer Löslichkeit von höchstens 15 g in 100 g Wasser zur Reduzierung oder Eliminierung von Formaldeyd- und Acetaldehydemissionen in aus fließfähigen Beschichtungssystemen hergestellten flächigen Produkten.

14. Verwendung gemäß Anspruch 13, wobei das fließfähige Beschichtungssystem aus PVC-Plastisolen, Polyolefindispersionen, Acrylatdispersionen oder Latices ausgewählt ist.

15. Verwendung gemäß Anspruch 14, wobei organisches Dihydrazid mit dem fließfähigen Beschichtungssystem auf ein Textil oder holzbasiertes Material aufgebracht wird.
